(19) **Europäisches Patentamt / European Patent Office / Office européen des brevets**

(11) **EP 1 746 391 B1**

(12) **EUROPEAN PATENT SPECIFICATION**

(45) Date of publication and mention
of the grant of the patent:
**25.08.2010 Bulletin 2010/34**

(21) Application number: **06253760.0**

(22) Date of filing: **18.07.2006**

(51) Int Cl.:
***G01C 21/36*** (2006.01)   ***G08G 1/0969*** (2006.01)

(54) **Image processing apparatus, mark drawing method and program thereof**

Bildverarbeitungsvorrichtung, Markierungsverfahren und entsprechendes Programm

Appareil de traitement d'images, procédé de dessin de repère et logiciel correspondant

(84) Designated Contracting States:
**DE ES FR GB IT**

(30) Priority: **19.07.2005 JP 2005208756**

(43) Date of publication of application:
**24.01.2007 Bulletin 2007/04**

(73) Proprietor: **SEGA CORPORATION**
**Tokyo 144-8531 (JP)**

(72) Inventors:
• **Fujiwara, Akihito**
**c/o Sega Corporation**
**Tokyo 144-8531 (JP)**
• **Hayashida, Yasuhiro**
**c/o Sega Corporation**
**Tokyo 144-8531 (JP)**

• **Akazawa, Tsutomu**
**c/o Sega Corporation**
**Tokyo 144-8531 (JP)**
• **Wada, Akira**
**c/o Sega Corporation**
**Tokyo 144-8531 (JP)**

(74) Representative: **Vinsome, Rex Martin et al**
**Urquhart-Dykes & Lord LLP**
**12th Floor, Cale Cross House**
**Pilgrim Street 156**
**Newcastle-upon-Tyne NE1 6SU (GB)**

(56) References cited:
**EP-A2- 0 953 826    EP-A2- 1 260 792**

## Description

## BACKGROUND OF THE INVENTION

1. Field of the Invention

The present invention generally relates to an image processing apparatus, a mark drawing method and a mark drawing program which can be applied to an apparatus such as a car navigation apparatus.

2. Description of the Related Art

A car navigation apparatus which displays the position and the moving direction of a car and so forth on a map on a display in the car has been widely used, and as the map on the display, a three-dimensional (3D) map which meets recent high technology standards is in demand. In the 3D map, 3D buildings are also displayed on the display while 3D roads are displayed.

On the display of the car navigation apparatus, in addition to the roads and the buildings, icons of many objects such as stores like gas stations, a destination, and a name and letters of the destination are displayed. When the objects are displayed on the 3D map, the following two methods are generally used.

> (1): a space coordinate showing the position of an object is displayed on a displaying screen and a mark such as an icon having a fixed size of the object is displayed as a 2D image on the space coordinate.
> (2): an object is displayed as a 3D image on a space coordinate showing the position of the object (refer to Patent Document 1).

> [Patent Document 1] Japanese Laid-Open Patent Application No. 9-319302

However, in the above method (1), since many icons, names, and letters are overlapped on a displaying screen, an object is hardly distinguished. In addition, since each icon has a fixed size, depth perception of the object is hardly obtained.

In addition, in the above method (2), since the object is in the 3D space, depth perception is obtained; however, when the object is a long distance from a view point, the object becomes too small and cannot be noticed. On the contrary, in a case where an object is a long distance from a car and the size of the object is made to be large enough so as to be noticeable , when the car comes near the object, the object becomes too large in the displaying screen and obstructs the total view. Therefore, the method (2) is effective when the displaying area is small and is not suitable when the displaying area is large.

One known image processing apparatus is disclosed in EP1260792A2. This discloses a map display apparatus and method for displaying a 3D map including roads and buildings on display. The distance between a view point and a route display line is determined as being in one of first to third regions specified in order from a shortest distance to a longest distance. The route line is then displayed with a width which has a maximum value in the first closest region, an intermediate value when the route line is in the second intermediate region and a smallest value when the route line is in the third most distant region.

## Summary of the Invention

Accordingly, the present invention may provide an image processing apparatus, a mark drawing method, and a mark drawing program in which notice-ability of object on a 3D map can be improved by controlling the two-dimensional sizes of the objects and controlling the number of objects to be displayed by utilizing distance difference from a view point while depth perception of the 3D space is maintained.

Features and advantages of the present invention are set fourth in the description which follows, and in part will become apparent from the description and the accompanying drawings, or may be learned by practice of the invention according to the teachings provided in the description. Features and advantages of the present invention may be realized and attained by an image processing apparatus, a mark drawing method, and a mark drawing program particularly pointed out in the specification in such full, clear, concise, and exact terms as to enable a person having ordinary skill in the art to practice the invention.

According to one aspect of the present invention, the is provided an image processing apparatus which displays a 3D (three-dimensional) map including a road and a building on a display, the image processing apparatus comprising:

> a determining unit that determines whether a distance between a view point which determines a visual field on a display and a 2D (two-dimensional) object to be displayed belongs to any of first through fourth areas which are classified in the order from a shortest distance to a longest distance;
> a first setting unit that sets an image drawing size of the 2D object on the display to be a maximum value when the distance between the view point and the 2D object is in the first area;
> a second setting unit that sets the image drawing size of the 2D object on the display when the distance between the view point and the 2D object is in the second area;
> a third setting unit that sets the image drawing size of the 2D object on the display to be the minimum value when the distance between the view point and the 2D object is in the third area;
> an image drawing unit that two-dimensionally displays the 2D object whose image drawings size is set on the display; and **characterised in that**:

the second setting unit sets the image drawing size of the 2D object on the display to be a value which continuously changes from the maximum value to a minimum value corresponding to the distance; and the apparatus further comprises a fourth setting unit that sets not to display the 2D object on the display when the distance between the view point and the 2D object is in the fourth area.

According to another aspect of the present invention, the image processing apparatus further includes a leg indicator drawing unit that draws a leg indicator which has a length corrected from a maximum length determined in each of the kinds of 2D objects based on the depression angle from the view point to the 2D object, and has an inverse triangular shape whose upper end contacts the 2D object and whose lower end indicates the point where the 2D object exists.

According to another aspect of the present invention, the 2D object which is set not to display by the fourth setting unit is displayed at a position corresponding to the existence of the 2D object on the horizon with the minimum image drawing size on the display when the 2D object is a specific spot which is registered by a user.

According to another aspect of the present invention, there is provided an image processing apparatus which displays a 3D map including a road and a building on a display, the image processing apparatus comprising:

a determining unit that determines whether a distance between a view point which determines a visual field on a display and a 3D object to be displayed belongs to any of first through fourth areas which are classified in the order from a shortest distance to a longest distance;

a first setting unit that sets an image drawing scale of the 3D object on a 3D space to be a minimum value when the distance between the view point and the 3D object is in the first area;

a second setting unit that sets the image drawing scale of the 3D object on the 3D space when the distance between the view point and the 3D object is in the second area;

a third setting unit that sets the image drawing scale of the 3D object on the 3D space to be the maximum value when the distance between the view point and the 3D object is in the third area;

an image drawings unit that three-dimensionally displays the 3D object whose image drawing scale is set on the display; and **characterised in that**:

the second setting unit sets the image drawing scale of the 3D object on the 3D space to be a value which continuously changes from a maximum value to the minimum value corresponding to the distance; and the apparatus further comprises a fourth setting unit that sets not to display the 3D object on the 3D space when the distance between the view point and the 3D object is in the fourth area.

According to another aspect of the present invention, a mark drawing method for an image processing apparatus which displays a 3D map including a road and a building on a display can be realized.

According to another aspect of the present invention, a mark drawing program for an image processing apparatus which displays a 3D map including a road and a building on a display can be realised.

According to an embodiment of the present invention, in an image processing apparatus, a mark drawing method, and a mark drawing program, noticeability of objects on a 3D map can be improved by controlling the two-dimensional sizes of the objects and controlling the number of objects to be displayed by utilizing distance difference from a view point while depth perception of the 3D space is maintained.

Features and advantages of the present invention will become apparent from the following detailed description when read in conjunction with the accompanying drawings.

## BRIEF DESCRIPTION OF THE DRAWINGS

Fig. 1 is a block diagram showing a car navigation apparatus according to an embodiment of the present invention;

Fig. 2 is a diagram showing a relationship between the displaying position of a 2D (two-dimensional) object to be displayed and an image drawing size of the object according to the embodiment of the present invention;

Fig. 3 is a diagram showing a relationship between the displaying positions of the 2D objects and the lengths of leg indicators of the 2D objects shown in Fig. 2;

Fig. 4 is a flowchart showing processes for drawing an image of the 2D object to be displayed such as the icon shown in Fig. 2;

Fig. 5 is a diagram showing a relationship between the displaying position of a 3D object to be displayed such as a destination object and an image drawing scale of the 3D object according to the embodiment of the present invention;

Fig. 6 is a diagram showing a change of the image drawing scale caused by the displaying position of a 3D object to be displayed such as a destination object shown in Fig. 5;

Fig. 7 is a flowchart showing processes for drawing an image of a 3D object to be displayed such as the destination object shown in Fig. 5;

Fig. 8 is an image drawing example of stores of 2D objects to be displayed according to the embodiment of the present invention;

Fig. 9 is an image drawing example of 2D objects which are memory spots input by a user as specific spots according to the embodiment of the present invention;

Fig. 10 is an image drawing example of a mark stipulated by the VICS (vehicle information and communication system) according to the embodiment of the present invention;

Fig. 11 is an image drawing example of a name display according to the embodiment of the present invention;

Fig. 12 is an image drawing example of traffic signal (sign) icons as 2D objects to be displayed according to the embodiment of the present invention;

Fig. 13 is an image drawing example of a traffic sign as a 2D object to be displayed according to the embodiment of the present invention; and

Fig. 14 is an image drawing example of a destination object as a 3D object to be displayed according to the embodiment of the present invention.

## DESCRIPTION OF THE PREFERRED EMBODIMENT

In the following, a preferred embodiment of the present invention is described with reference to the accompanying drawings.

In the embodiment, a case where the present invention is applied to a car navigation apparatus is described.

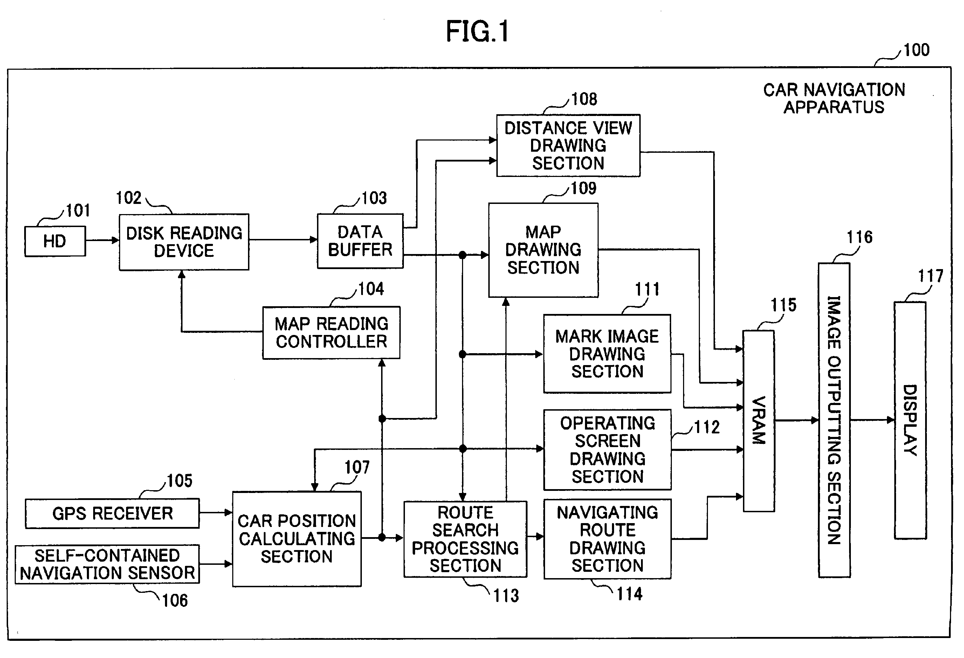

Fig. 1 is a block diagram showing the car navigation apparatus according to the embodiment of the present invention. As shown in Fig. 1, a car navigation apparatus 100 includes a HD (hard disk) 101 which stores 3D map information including information of two-dimensional (2D) icons showing objects to be displayed, a disk reading device 102 which reads the 3D map information from the HD 101, a data buffer 103 which temporarily stores the 3D map information read from the HD 101 by the disk reading device 102, and a map reading controller 104 which controls the disk reading device 102 to read the 3D map information. In this, as an information storing device, in addition to the HD 101, or instead of the HD 101, a DVD (digital versatile disk), or a CD (compact disk) can be used. The car navigation apparatus 100 further includes a GPS (global positioning system) receiver 105 which obtains position information of a car in which the car navigation apparatus 100 is installed, a self-contained navigation sensor 106 which detects the moving direction, acceleration, speed, moved distance, and so on of the car, and a car position calculating section 107 which calculates the car position from information from the GPS receiver 105 and the self-contained navigation sensor 106. Information of the calculated car position is sent to the map reading controller 104, and the map reading controller 104 controls the disk reading device 102 to read map information in a range where the car is located.

In addition, the car navigation apparatus 100 includes a distant view drawing section 108, a map drawing section 109, a mark image drawing section 111, an operating screen drawing section 112, a route search processing section 113, a navigating route drawing section 114, and a VRAM (video random access memory) 115. The distant view drawing section 108 draws a distant view image in the VRAM 115 based on the 3D map information obtained from the data buffer 103 and the car position information obtained from the car position calculating section 107. The map drawing section 109 draws a map image of roads and 3D buildings in the VRAM 115 based on the 3D map information obtained from the data buffer 103. The mark image drawing section 111 draws images of objects to be displayed such as icons in the VRAM 115 based on the 3D map information obtained from the data buffer 103. The operating screen drawing section 112 draws an operating screen image in the VRAM 115 based on the 3D map information obtained from the data buffer 103. The route search processing section 113 searches for a most suitable route to a destination received from a user based on the 3D map information obtained from the data buffer 103 and the car position information obtained from the car position calculating section 107. The navigating route drawing section 114 draws a navigating route image in the VRAM 115 based on the search result from the route search processing section 113. In addition, the car navigation apparatus 100 includes an image outputting section 116 which outputs the distant view image, the map image, the object image, the operating screen image, and the navigating route image; and a display 117 which displays a composite image of the above images.

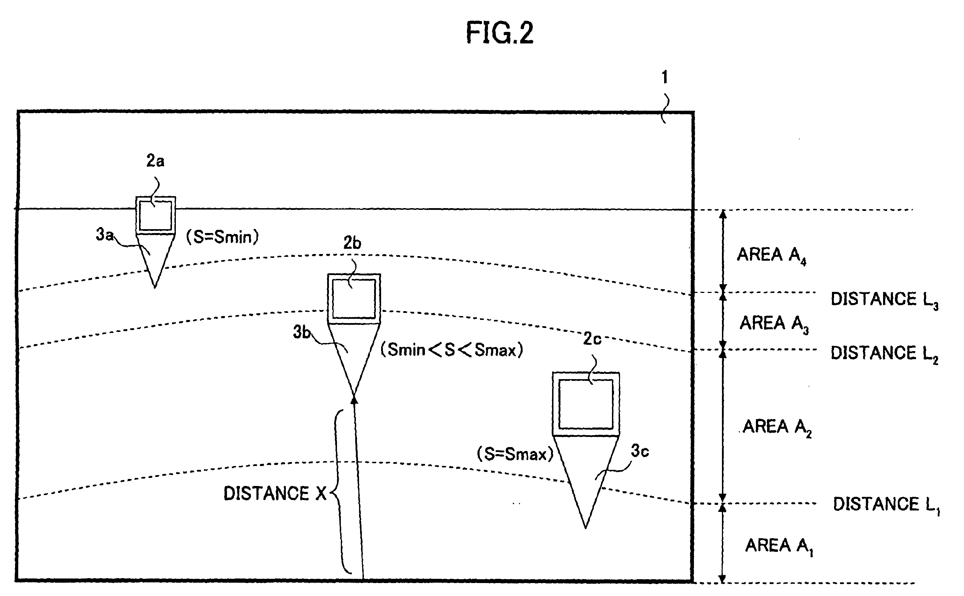

Fig. 2 is a diagram showing a relationship between the displaying position of a 2D (two-dimensional) object to be displayed and an image drawing size of the 2D object. In the displaying screen 1, areas $A_1$, $A_2$, $A_3$, and $A_4$, which are classified by distances $L_1$, $L_2$, and $L_3$ from a view point (camera) to an object to be displayed, are determined. Then, the image drawing size of an object to be displayed is determined based on which area the object exists in. In the displaying screen 1, $A_4$ is an area where a distant view (an image such as sky, distant mountains, and distant houses) is displayed.

In Fig. 2, signs are defined as follows. In some cases, hereinafter an object to be displayed is simply referred to as an object.

X is a distance between a view point coordinate (camera) and a space coordinate (two-dimensional coordinate) of an object to be displayed.

$L_1$ is a distance within which the image drawing size of the object to be displayed does not become larger even if the view point approaches the object.

$L_2$ is a distance beyond which the image drawing size of the object to be displayed does not become smaller even if the view point leaves from the object.

$L_3$ is a distance beyond which no object is displayed. That is, there is the following relationship; $X \geq 0$, $0 < L_1 < L_2 < L_3$.

Further, in Fig. 2, other signs are defined as follows.

S is the image drawing size of an object to be displayed.

$S_{min}$ is the minimum image drawing size of the object which is noticeable on the displaying screen 1.

$S_{max}$ is the maximum image drawing size of the object which does not obstruct the view of the whole screen.

Next, the areas $A_1$ through $A_4$ are described.

## Area $A_1$ $(X < L_1)$

$A_1$ is an area where an object is displayed with the maximum image drawing size. The maximum image drawing size of the object is maintained on the displaying screen 1 and the maximum image drawing size does not obstruct the whole screen. The maximum image drawing size is $S_{max}$ as described above.

## Area $A_2$ $(L_1 \leq X < L_2)$

$A_2$ is an area where the image drawing size of the object is enlarged or reduced. The depth perception is obtained by changing the image drawing size corresponding to the distance X. The changing range of the image drawing size is $S_{max} < S < S_{min}$.

## Area $A_3$ $(L_2 \leq X < L_3)$

$A_3$ is an area where the object is displayed with the minimum image drawing size. The minimum image drawing size of the object is maintained on the displaying screen 1 and the minimum image drawing size is $S_{min}$ and is a noticeable size.

## Area $A_4$ $(X \geq L_3)$

$A_4$ is an area no object is displayed and the furthest area on the displaying screen 1. Further, $A_4$ is an area that prevents many objects from being displayed

In Fig. 2, as an example, an object 2a in the area $A_3$, an object 2b in the area $A_2$, and an object 2c in the area $A_1$ are shown. The object 2a in the area $A_3$ is two-dimensionally displayed on the displaying screen 1 with the image drawing size $S = S_{min}$, the object 2b in the area $A_2$ is two-dimensionally displayed on the displaying screen 1 with the image drawing size S which changes in the range between $S_{min}$ and $S_{max}$ corresponding to the distance X, and the object 2c in the area $A_1$ is two-dimensionally displayed on the displaying screen 1 with the image drawing size $S = S_{max}$. Each of the objects 2a through 2c has a leg indicator (leg effect) having an inverse triangular shape. That is, a leg indicator 3a is attached to the object 2a so that the upper end contacts the object 2a and the lower end indicates the point where the object 2a exists and the object 2a is in a floating state from the surface of the earth, a leg indicator 3b is attached to the object 2b so that the upper end contacts the object 2b and the lower end indicates the point where the object 2b exists and the object 2b is in a floating state from the surface of the earth, and a leg indicator 3c is attached to the object 2c so that the upper end contacts the object 2c and the lower end indicates the point where the object 2c exists and the object 2c is in a floating state from the surface of the earth. The length of each of the leg indicators 3a through 3c is suitably adjusted corresponding to the image drawing size of each of the objects 2a through 2c. The leg indicators 3a through 3c are displayed on the displaying screen 1 with the objects 2a through 2c. In the embodiment of the present invention, as described above, the inverse triangular shape indicator is defined as the leg indicator. In Fig. 2, the objects 2a through 2c are displayed as icons.

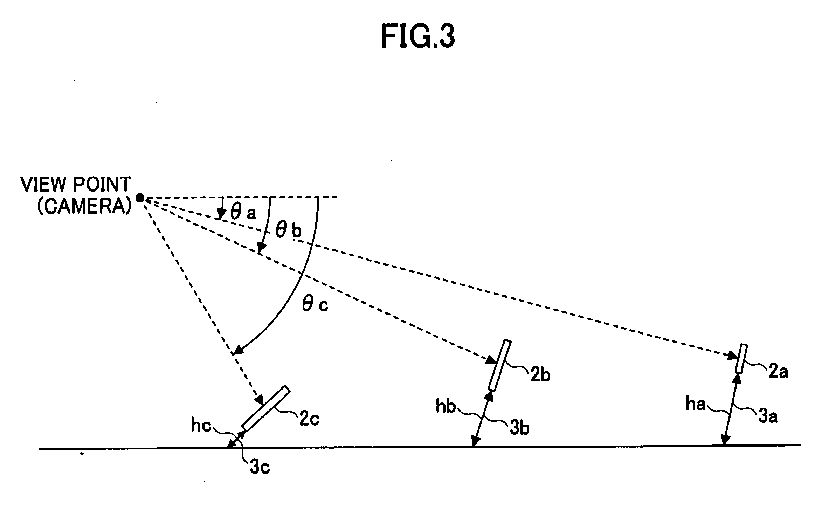

Fig. 3 is a diagram showing a relationship between the displaying positions of 2D objects and the lengths of the leg indicators of the 2D objects. In Fig. 3, each size of the objects is conceptually shown to become an image drawing size when the object is displayed on the displaying screen 1.

In Fig. 3, signs are defined as follows. "θ" is the depression angle of the view point (camera).

"h" is the length of the leg indicator which is changed by the depression angle θ.

Each object always faces the view point and the maximum length of the leg indicator is $h_{max}$, and when the depression angle θ becomes large, the length "h" becomes small. In this, the maximum length $h_{max}$ of the leg indicator is determined by the kinds of objects. Specifically, the length "h" of the leg indicator is determined by multiplying the maximum length $h_{max}$ by cos θ, and corresponds to a length when a 2D object is viewed by the depression angle θ. In Fig. 3, the length ha of the leg indicator 3a of the object 2a becomes close to the maximum length $h_{max}$. The length "h" becomes smaller in the order from the length hb of the leg indicator 3b of the object 2b to the length hc of the leg indicator 3c of the object 2c.

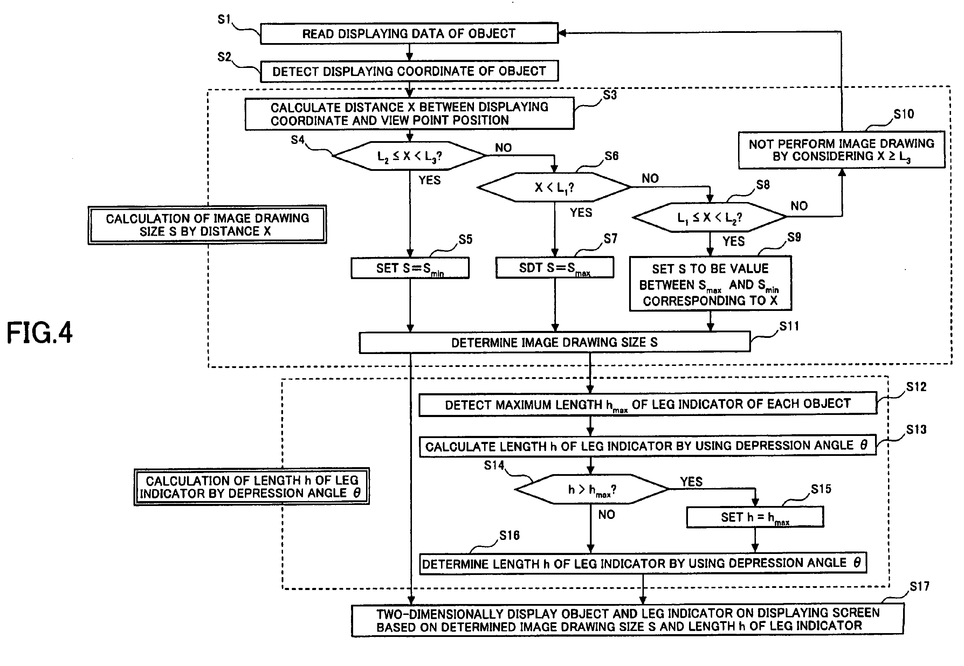

Fig. 4 is a flowchart showing processes for drawing an image of a 2D object to be displayed such as an icon. The processes are performed by software (a computer program) in the mark image drawing section 111 shown in Fig. 1.

First, displaying data of an object to be displayed are read from the data buffer 103 (step S1), and the displaying coordinate (displaying position) of the object is detected (step S2). The distance X between the displaying coordinate and the view point position is calculated (step S3). Next, it is determined whether $L_2 \leq X < L_3$ is satisfied, that is, whether the object is in the area

$A_3$ (step S4). When the object is in the area $A_3$ (YES in step S4), the image drawing size of the object is set to be $S_{min}$ (step S5). When the object is not in the area $A_3$ (NO in step S4), it is determined whether $X < L_1$ is satisfied, that is, whether the object is in the area $A_1$ (step S6). When the object is in the area $A_1$ (YES in step S6), the image drawing size of the object is set to be $S_{max}$ (step S7). When the object is not in the area $A_1$ (NO in step S6), it is determined whether $L_1 \leq X < L_2$ is satisfied, that is, whether the object is in the area $A_2$ (step S8). When the object is in the area $A_2$ (YES in step S8), the image drawing size of the object is set to be a value which continuously changes from the maximum value $S_{max}$ to the minimum value $S_{min}$ corresponding to the distance $X$ (step S9). When the object is not in the area $A_2$ (NO in step S8), the image drawing of the object is not performed by considering $X \geq L_3$ (step S10), and the process returns to step S1. By the setting in steps S5, S7, and S9, the image drawing size S is determined (step S11).

Next, the maximum length $h_{max}$ of the leg indicator of each object to be displayed is detected (step S12), and the length "h" of the leg indicator is calculated by using the depression angle θ from the view point (step S13). Next, it is determined whether the length "h" of the leg indicator is larger than the maximum length $h_{max}$ (step S14). When the length "h" of the leg indicator is larger than the maximum length $h_{max}$ (YES in step S14), the maximum length $h_{max}$ is set to be the length "h" (step S15) and the length "h" is determined (step S16). When the length "h" of the leg indicator is not larger than the maximum length $h_{max}$ (NO in step S14), the length "h" is determined as it is by using the depression angle θ (step S16). Then, the object to be displayed and the leg indicator are two-dimensionally displayed on the displaying screen 1 based on the determined image drawing size S and the length "h" of the leg indicator (step S17).

As described above, since a 2D object such as an icon, which is positioned near the view point, is drawn by a maximum image drawing size which is a fixed size, even if a car approaches the object, the icon does not become too large and does not obstruct the whole screen. In addition, when the car is a long distance from an object, the object is displayed with a noticeable minimum image drawing size; therefore, a case where a user of the car cannot recognize the object due to a too-small size of the object does not occur. In addition, when the object is in a middle distance from the car, since the image drawing size is changed corresponding to the distance between the object and the car, depth perception can be obtained. Further, if the object is far from a predetermined distance, the object is not displayed; therefore, displaying too many objects can be avoided. In addition, when the object is displayed with the leg indicator, the length of the leg indicator is changed by the depression angle from the view point; therefore, a visual effect similar to a 3D effect can be obtained and the displaying position (indicating position) of the object can be easily recognized. Further, since the length of the leg indicator is different from among the kinds of objects to be displayed, the kind of object can be easily recognized by the floating height above the surface of the earth.

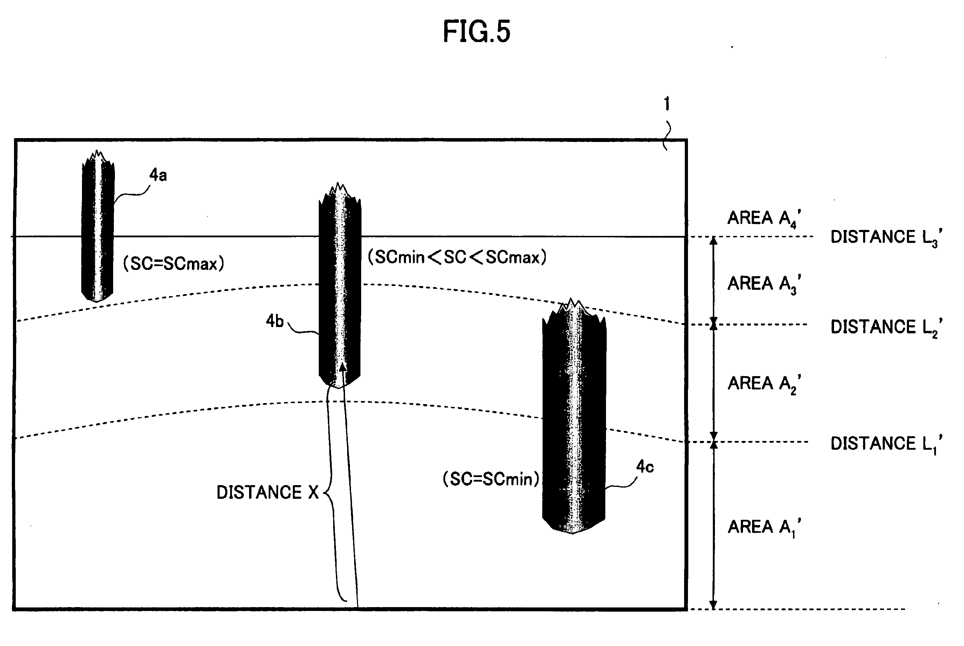

Next, a 3D object to be displayed is described. Fig. 5 is a diagram showing a relationship between the displaying position of a 3D object to be displayed such as a destination object and an image drawing scale of the 3D object. In the displaying screen 1, areas $A_1'$, $A_2'$, $A_3'$, and $A_4'$, which are classified by distances $L_1'$, $L_2'$, and $L_3'$ from a view point (camera) that determines a visual field on a display, are determined. Then, the image drawing scale of an object to be displayed is determined based on which area the object exists in. The 3D object such as the destination object is different from the 2D object which is displayed by an icon and the 3D object is displayed as a 3D object on the displaying screen 1. In addition, the image drawing scale is different from the image drawing size of the 2D object described above on the displaying screen 1, and the image drawing scale is a scaling factor (reducing and enlarging factor) to apply to the 3D object on the displaying screen 1. Generally, the object becomes large when the car approaches the object and becomes small when the car leaves the object. In addition to the above, when the image drawing scale is applied, the size of the object is changed based on the image drawing scale on the displaying screen 1.

In Fig. 5, signs are defined as follows.

X is a distance between a view point coordinate (camera) and a space coordinate (two-dimensional coordinate) of an object to be displayed.

$L_1'$ is a distance within which the image drawing scale of the object is not decreased even if the view point approaches the object.

$L_2'$ is a distance beyond which the image drawing scale of the object is not increased even if the view point leaves the object.

$L_3'$ is a distance beyond which no object is displayed. That is, there is the following relationship; $X \geq 0$, $0 < L_1' < L_2' < L_3'$.

Further, in Fig. 5, other signs are defined as follows.

SC is an image drawing scale of an object to be displayed.

$SC_{min}$ is the optimal minimum image drawing scale of the object on the displaying screen 1.

$SC_{max}$ is the optimal maximum image drawing scale of the object on the displaying screen 1.

Next, the areas $A_1'$ through $A_4'$ are described.

## Area $A_1'$ ($X < L_1'$)

$A_1'$ is an area where the image drawing scale of an object to be displayed is set to be an optimal minimum scale and maintains the optimal minimum image drawing scale even when a car approaches the object. That is, in the area $A_1'$, the image drawing size of the object is maintained not to become too large. At this time, the image drawing scale is $SC_{min}$. Since the image drawing scale is not changed, when the car approaches the object, the object gradually becomes large and also the height of the object gradually becomes large under the optimal minimum image drawing scale. That is, depth perception can be obtained.

## Area $A_2'$ $(L_1' \leq X < L_2')$

$A_2'$ is an area where the image drawing scale of the object is changed corresponding to the displaying position of the object. That is, the image drawing scale of the object is changed corresponding to the distance X of the object; then, the size of the object is noticeable as almost the same size as in the area. The changing range of the image drawing scale is $SC_{min} < SC < SC_{max}$. When the car approaches the object, the image drawing scale is changed together with the distance; therefore, the size of the object is maintained as almost the same size in the displaying screen 1.

## Area $A_3'$ $(L_2' \leq X < L_3')$

$A_3'$ is an area where the image drawing scale is set to be an optimal maximum scale and maintains the optimal maximum image drawing scale even when a car leaves the object. The object is displayed on the 3D map with an extremely large size; therefore, the object is noticeable even if the object is a long distance from the car. At this time, the image drawing scale is $S_{max}$. Since the optimal maximum image drawing scale is used, when the car approaches the object, the object gradually becomes large and also the height of the object of the object gradually becomes high. Therefore, depth perception can be obtained.

## Area $A_4'$ $(X \geq L_3')$

$A_4'$ is an area where no object is displayed. The destination object should be displayed even if the object is a great distance from the car; however, there is actually an upper limit in the displaying distance. Therefore, in this case, the upper limit is provided.

In Fig. 5, as an example, an object 4a in the area $A_3'$, an object 4b in the area $A_2'$, and an object 4c in the area $A_1'$ are shown. The object 4a in the area $A_3'$ is three-dimensionally displayed on the displaying screen 1 with the image drawing scale $SC = SC_{max}$ corresponding to the distance X from the view point, the object 4b in the area $A_2'$ is three-dimensionally displayed on the displaying screen 1 with the image drawing scale SC which is set in the range between $S_{min}$ and $S_{max}$ corresponding to the distance X from the view point, and the object 4c in the area $A_1'$ is three-dimensionally displayed on the displaying screen 1 with the image drawing scale $SC = SC_{min}$ corresponding to the distance X from the view point.

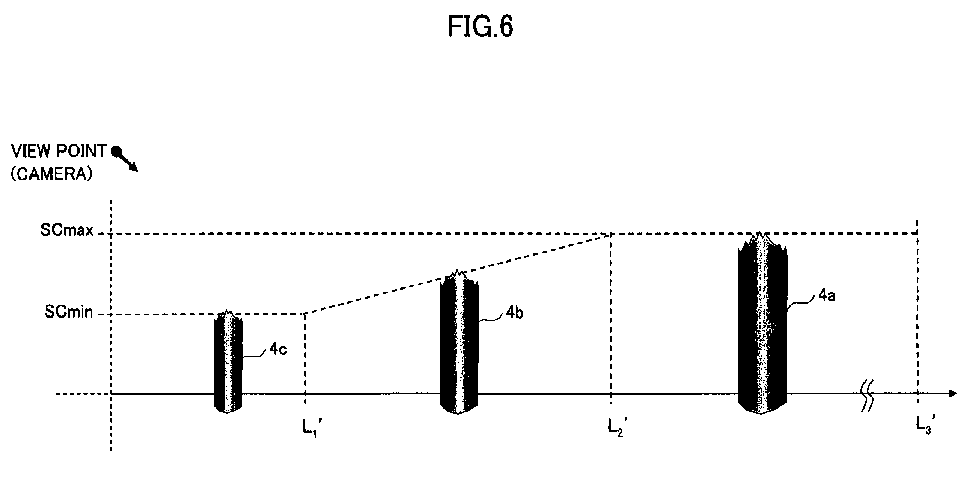

Fig. 6 is a diagram showing a change of the image drawing scale caused by the displaying position of a 3D object to be displayed such as a destination object. As shown in Fig. 6, the image drawing scale SC of the object to be displayed 4c, whose distance X from the view point (camera) is $X < L_1'$ is $SC_{min}$, the image drawing scale SC of the object to be displayed 4b, whose distance X from the view point (camera) is $L_1' \leq X < L_2'$ is the range between $SC_{min}$ and $SC_{max}$, and the image drawing scale SC of the object to be displayed 4a, whose distance X from the view point (camera) is $L_2' \leq X < L_3'$ is $SC_{max}$. That is, when the object is a long distance from the view point, the scaling factor of the image drawing scale becomes large, and when the object is near the view point, the scaling factor of the image drawing scale becomes small.

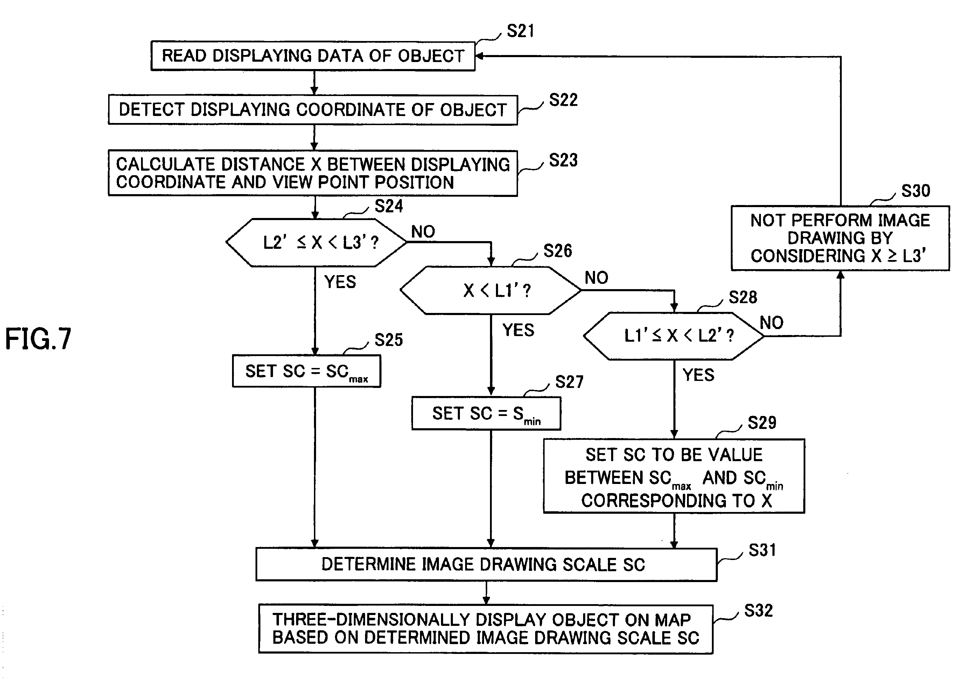

Fig. 7 is a flowchart showing processes for drawing an image of a 3D object to be displayed such as a destination object. The processes are performed by software (a computer program) in the mark image drawing section 111 shown in Fig. 1.

First, displaying data of an object to be displayed are read from the data buffer 103 (step S21), and the displaying coordinate (displaying position) of the object is detected (step S22). The distance X between the displaying coordinate and the view point position is calculated (step S23). Next, it is determined whether $L_2' \leq X < L_3'$ is satisfied, that is, whether the object is in the area $A_3'$ (step S24). When the object is in the area $A_3'$ (YES in step S24), the image drawing scale of the object is set to be $SC_{max}$ (step S25). When the object is not in the area $A_3'$ (NO in step S24), it is determined whether $X < L_1'$ is satisfied, that is, whether the object is in the area $A_1'$ (step S26). When the object is in the area $A_1'$ (YES in step S26), the image drawing scale of the object is set to be $SC_{min}$ (step S27). When the object is not in the area $A_1'$ (NO in step S26), it is determined whether $L_1' \leq X < L_2'$ is satisfied, that is, whether the object is in the area $A_2'$ (step S28). When the object is in the area $A_2'$ (YES in step S28), the image drawing scale of the object is set to be a factor which continuously changes from the maximum value $SC_{max}$ to the minimum value $8C_{min}$ corresponding to the distance X (step S29). When the object is not in the area $A_2'$ (NO in step S28), the drawing image of the object is not performed by considering $X \geq L_3'$ (step S30), and the process returns to step S21. By the settings in steps S25, S27, and S29, the image drawing scale SC is determined (step S31). Based on the determined image drawing scale SC, the object is three-dimensionally displayed on the displaying screen 1 (on the map) (step S32).

As described above, in the 3D object to be displayed such as the destination object, when the object is a long distance from the view point, the image drawing scale is set to be the maximum image drawing scale. With this, the destination object is displayed relatively larger than other objects and can be easily noticed. In addition, when the object is near the view point, the image drawing scale is set to be the minimum image drawing scale. With this, the destination object is prevented from being displayed with a too large size. Further, in the middle of the distance, the image drawing scale is changed corresponding to the distance; therefore, the image drawing size can be maintained with almost the same size.

Next, examples of image drawing of a mark such an icon are described.

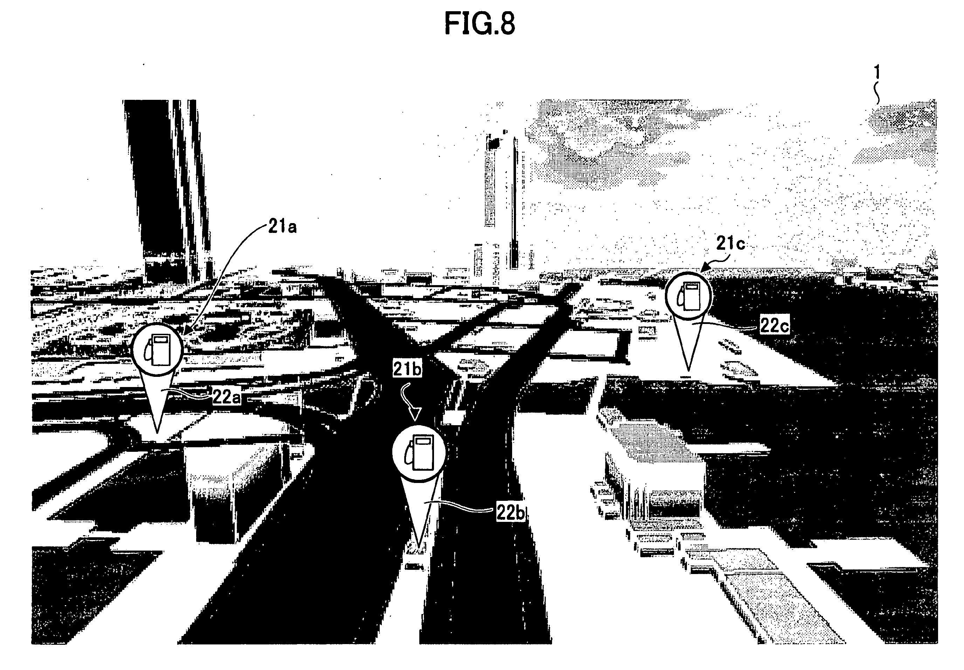

Fig. 8 is an image drawing example of stores of 2D objects to be displayed. In this, the stores are displayed as icons. As shown in Fig. 8, store marks 21a, 21b, and 21c are displayed with leg indicators 22a, 22b, and 22c. In Fig. 8, gas stations are shown as the stores.

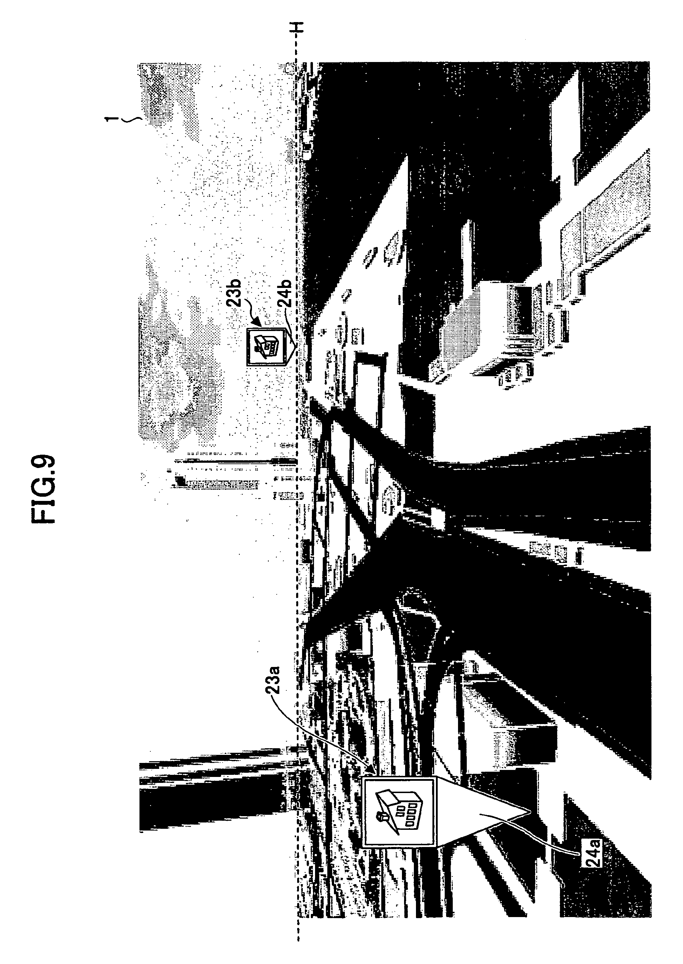

Fig. 9 is an image drawing example of 2D objects which are memory spots input by a user as specific spots. The memory spots are registered by a user. In Fig. 9, memory spots 23a and 23b are displayed with leg indicators 24a and 24b. Generally, a 2D object which is a long distance from the view point is not displayed. However, the memory spot is different from a general 2D object to be displayed, and even if the memory spot is a long distance from the view point, as shown in Fig. 9, the memory spot 23b having the leg indicator 24b is displayed with the minimum image drawing size at a position on the horizon H. In addition to the above memory spot, a spot which is given by the navigation apparatus and a spot which is given from the outside via a communication network can be the memory spot.

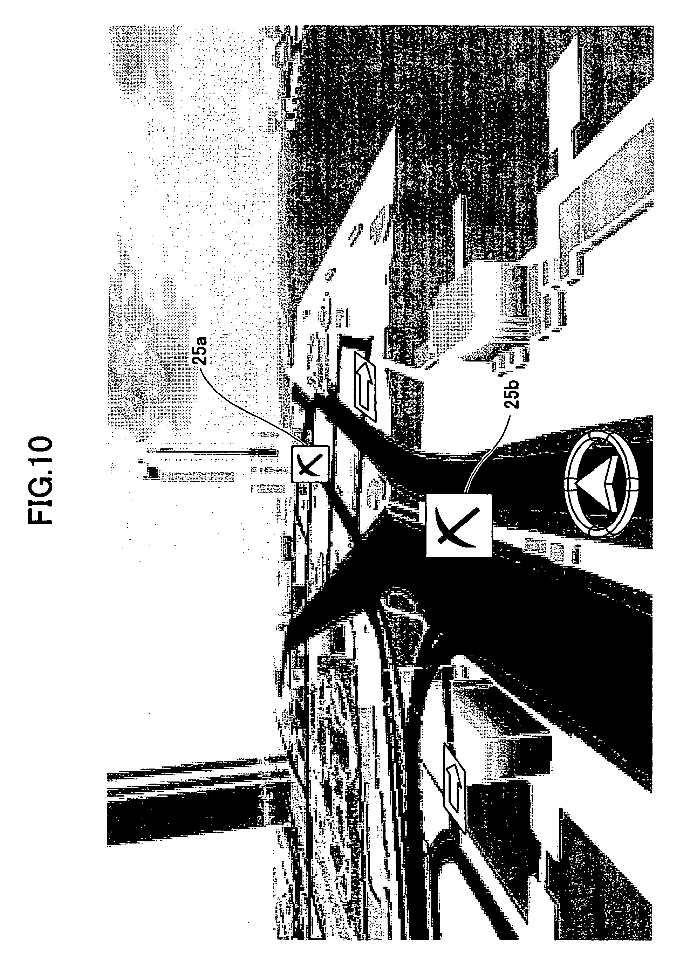

Fig. 10 is an image drawing example of a mark stipulated by the VICS (vehicle information and communication system). As shown in Fig. 10, marks 25a and 25b stipulated by the VICS are displayed. The marks stipulated by the VICS are displayed without leg indicators. In Fig. 10, marks under construction 25a and 25b are displayed.

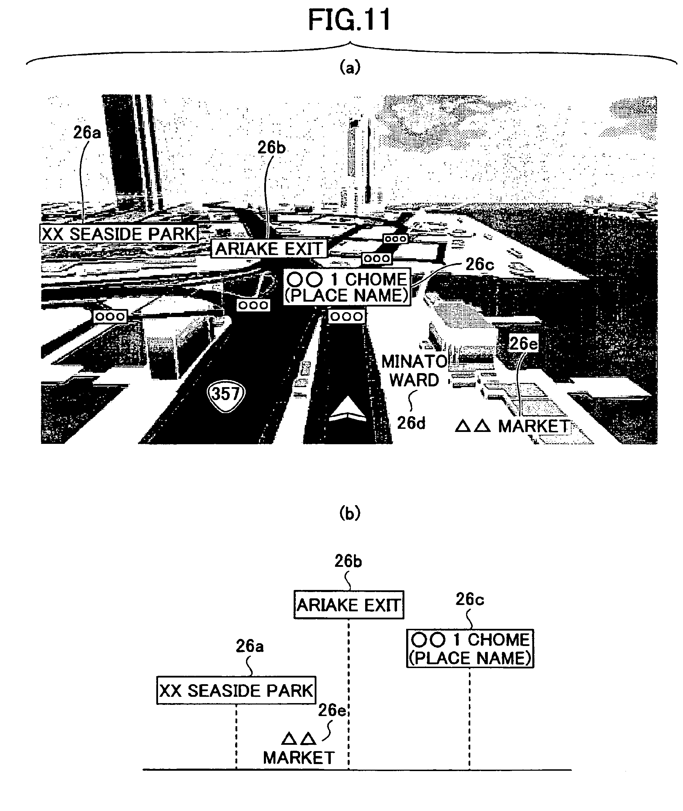

Fig. 11 is an image drawing example of a name display. As shown in Fig. 11(a), names 26a through 26e are displayed. The name is an intersection name, a route name, a place name, and so on. As shown in Fig. 11(b), the height from the surface of the earth is different among the kinds of names.

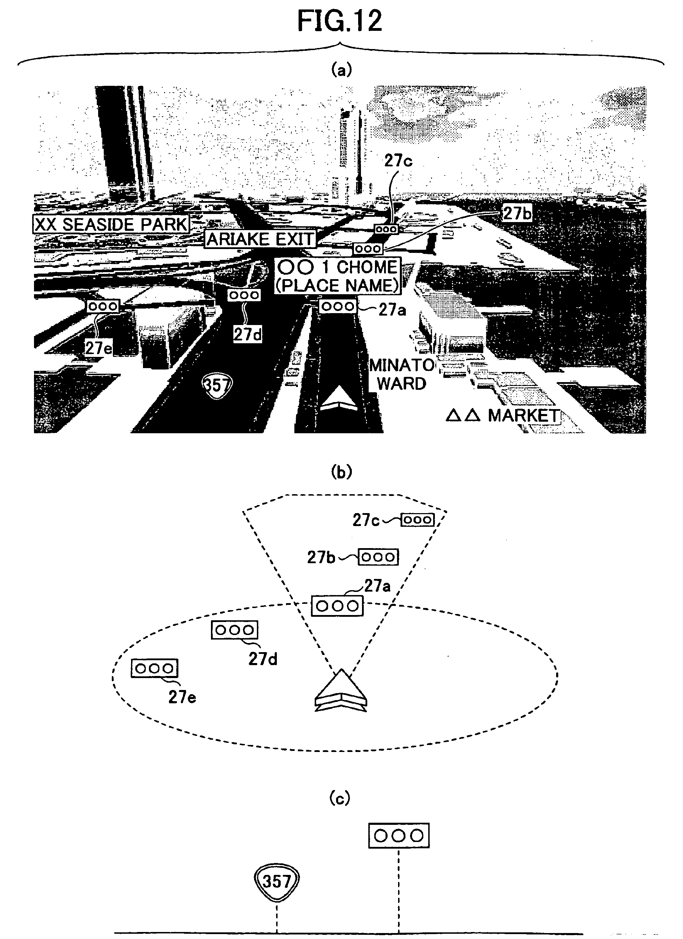

Fig. 12 is an image drawing example of traffic signal (sign) icons as 2D objects to be displayed. As shown in Fig. 12(a), traffic signals 27a through 27e are displayed with the name of the place (route and intersection). As shown in Fig. 12(b), only the traffic signals which are near the car and in the car moving direction are displayed. With this, it is avoided to display too many traffic signals. In addition, as shown in Fig. 12(c), the displaying height is different among the kinds of signs.

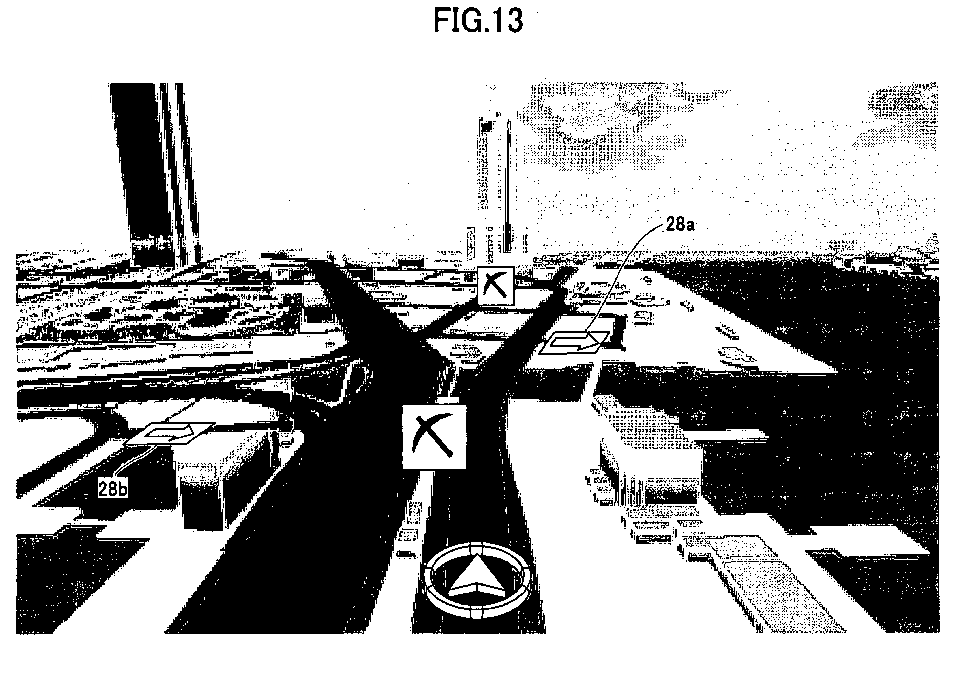

Fig. 13 is an image drawing example of a traffic sign as a 2D object to be displayed. As shown in Fig. 13, one-way traffic sign icons 28a and 28b are displayed.

Next, an example of image drawing of a destination object as a 3D object to be displayed is described.

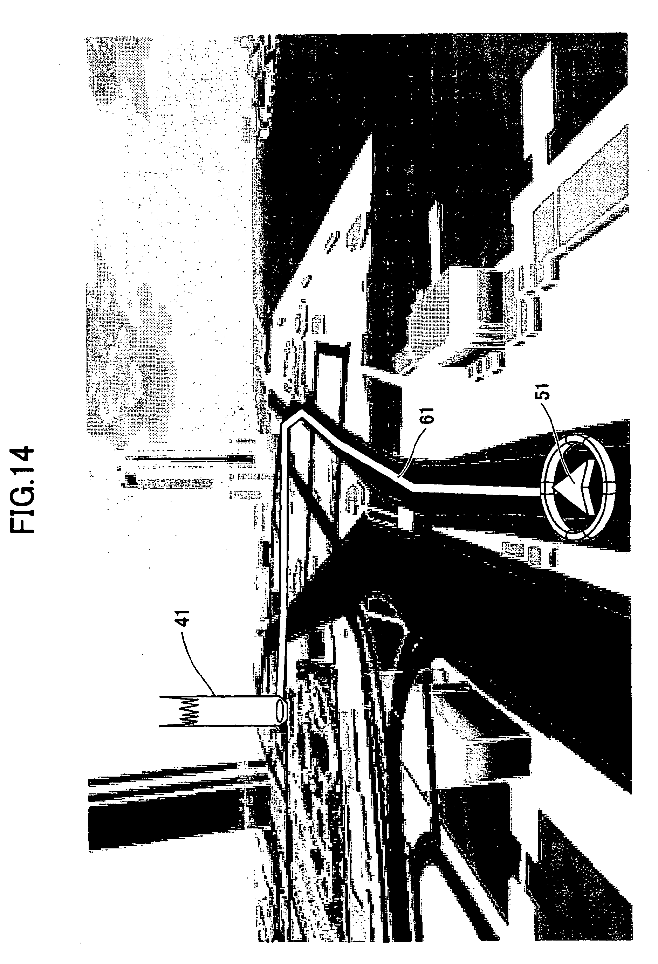

Fig. 14 is an image drawing example of a destination object as a 3D object to be displayed. As shown in Fig. 14, a destination object 41 is displayed ahead on a route 61 extending from a car icon 51.

In the embodiment, the present invention is applied to a car navigation apparatus. However, the present invention can be applied to a portable navigation apparatus, a simulator, a game, and so on.

Further, the present invention is not limited to the embodiment, but variations and modifications may be made without departing from the scope of the present claims.

## Claims

1. An image processing apparatus (100) which displays a 3D (three-dimensional) map including a road and a building on a display (117), the image processing apparatus comprising:

a determining unit (111) that determines whether a distance between a view point which determines a visual field on a display and a 2D object (2a, 2b, 2c) to be displayed belongs to any of first through fourth areas ($A_1$-$A_4$) which are classified in the order from a shortest distance to a longest distance;
a first setting unit (111) that sets an image drawing size of the 2D object on the display to be a maximum value when the distance between the view point and the 2D object is in the first area;
a second setting unit (111) that sets the image drawing size of the 2D object on the display when the distance between the view point and the 2D object is in the second area;
a third setting unit (111) that sets the image drawing size of the 2D object on the display to be the minimum value when the distance between the view point and the 2D object is in the third area;
an image drawing unit (111) that two-dimensionally displays the 2D object whose image drawings size is set on the display; and **characterised in that**:

the second setting unit sets the image drawing size of the 2D object on the display to be a value which continuously changes from the maximum value to a minimum value corresponding to the distance; and
the apparatus further comprises a fourth setting unit (111) that sets not to display the 2D object on the display when the distance between the view point and the 2D object is in the fourth area.

**2.** The image processing apparatus as claimed in claim 1, the image processing apparatus further **characterised by**:

a leg indicator drawing unit (114) that draws a leg indicator which has a length corrected from a maximum length determined in each of the kinds of 2D objects based on the depression angle from the view point to the 2D object and has an inverse triangular shape whose upper end contacts the 2D object and whose lower end indicates a point where the 2D object exists.

**3.** The image processing apparatus as claimed in claim 1 or 2, the image processing apparatus **characterised in that** the 2D object which is set not to display by the fourth setting unit is displayed at a position corresponding to the existence of the 2D object on the horizon with the minimum image drawing size on the display when the 2D object is a specific spot which is registered by a user.

**4.** An image processing apparatus (100) which displays a 3D map including a road and a building on a display (117), the image processing apparatus comprising:

a determining unit (111) that determines whether a distance between a view point which determines a visual field on a display and a 3D object (4a, 4b, 4c) to be displayed belongs to any of first through fourth areas ($A_1'$-$A_4'$) which are classified in the order from a shortest distance to a longest distance;

a first setting unit (111) that sets an image drawing scale of the 3D object on a 3D space to be a minimum value when the distance between the view point and the 3D object is in the first area;

a second setting unit (111) that sets the image drawing scale of the 3D object on the 3D space when the distance between the view point and the 3D object is in the second area;

a third setting unit (111) that sets the image drawing scale of the 3D object on the 3D space to be the maximum value when the distance between the view point and the 3D object is in the third area;

an image drawings unit (111) that three-dimensionally displays the 3D object whose image drawing scale is set on the display; and **characterised in that**;

the second setting unit sets the image drawing scale of the 3D object on the 3D space to be a value which continuously changes from a maximum value to the minimum value corresponding to the distance; and

the apparatus further comprises a fourth setting unit (111) that sets not to display the 3D object on the 3D space when the distance between the view point and the 3D object is in the fourth area.

**5.** A mark drawing method adapted to cause an image processing apparatus (100) to display a 3D map including a road and a building on a display, the mark drawing method comprising;

a determining step (S3-S8) that determines whether a distance between a view point which determines a visual field on a display and a 2D object (2a, 2b, 2c) to be displayed belongs to any of first through fourth areas ($A_1$-$A_4$) which are classified in the order from a shortest distance to a longest distance;

a first setting step (S7) that sets an image drawing size of the 2D object on the display to be a maximum value when the distance between the view point and the 2D object is in the first area;

a second setting step (S9) that sets the image drawing size of the 2D object on the display when the distance between the view point and the 2D object is in the second area;

a third setting step (S5) that sets the image drawing size of the 2D object on the display to be a minimum value when the distance between the view point and the 2D object is in the third area;

an image drawing step (S17) that two-dimensionally displays the 2D object whose image drawing size is set on the display; and **characterised in that**:

the second setting step sets the image drawing size of the 2D object on the display to be a value which continuously changes from the maximum value to a minimum value corresponding to the distance; and

the method further comprises a fourth setting step (S10) that sets not to display the 2D object on the display when the distance between the view point and the 2D object is in the fourth area.

**6.** A mark drawing method adapted to cause an image processing apparatus (100) to display a 3D map including a road and a building on a display, the mark drawing method comprising:

a determining step (S3-S8) that determines whether a distance between a view point which determines a visual field on a display and a 3D object (4a, 4b, 4c) to be displayed belongs to any of first through fourth areas ($A_1'$-$A_4'$) which are classified in the order from a shortest distance to a longest distance;

a first setting step (S7) that sets an image drawing scale of the 3D object on a 3D space to be a minimum value when the distance between the view point and the 3D object is in the first area;

a second setting step (S9) that sets the image drawing scale of the 3D object on the 3D space when the distance between the view point and the 3D object is in the second area;
a third setting step (S5) that sets the image drawing scale of the 3D object on the 3D space to be the maximum value when the distance between the view point and the 3D object is in the third area;
an image drawing step (S17) that three-dimensionally displays the 3D object whose image drawing scale is set on the display; and **characterised in that**:

the second setting step (S9) sets the image drawing scale of the 3D object on the 3D space to be a value which continuously changes from a maximum value to the minimum value corresponding to the distance;
the method further comprises a fourth setting step (S10) that sets not to display the 3D object on the 3D space when the distance between the view point and the 3D object is in the fourth area.

7. A mark drawing program adapted to cause an image processing apparatus (100) to display a 3D map including a road and a building on a display, the mark drawing program comprising program means adapted to carry out:

a determining step (S3-S8) that determines whether a distance between a view point which determines a visual field on a display and a 2D object (2a, 2b, 2c) to be displayed belongs to any of first through fourth areas ($A_1$-$A_4$) which are classified in the order from a shortest distance to a longest distance;
a first setting step (S7) that sets an image drawing size of the 2D object on the display to be a maximum value when the distance between the view point and the 2D object is in the first area;
a second setting step (S9) that sets the image drawing size of the 2D object on the display when the distance between the view point and the 2D object is in the second area;
a third setting step (S5) that sets the image drawing size of the 2D object on the display to be a minimum value when the distance between the view point and the 2D object is in the third area;
an image drawing step (S17) that two-dimensionally displays the 2D object whose image drawing size is set on the display; and **characterised in that**:

the second setting step sets the image drawing size of the 2D object on the display to be a value which continuously changes from the maximum value to a minimum value corresponding to the distance; and
the program further comprises program means adapted to carry out a fourth setting step (S10) that sets not to display the 2D object on the display when the distance between the view point and the 2D object is in the fourth area.

8. A mark drawing program adapted to cause an image processing apparatus (100) to display a 3D map including a road and a building on a display, the mark drawing program comprising program means adapted to carry out;
a determining step (S3-S8) that determines whether a distance between a view point which determines a visual field on a display and a 3D object (4a, 4b 4c) to be displayed belongs to any of first through fourth areas ($A_1$'-$A_4$') which are classified in the order from a shortest distance to a longest distance;
a first setting step (S7) that sets an image drawing scale of the 3D object on a 3D space to be a minimum value when the distance between the view point and the 3D object is in the first area;
a second setting step (S9) that sets the image drawing scale of the 3D object on the 3D space when the distance between the view point and the 3D object is in the second area;
a third setting step (S5) that sets the image drawing scale of the 3D object on the 3D space to be the maximum value when the distance between the view point and the 3D object is in the third area;
an image drawing step (S17) that three-dimensionally displays the 3D object whose image drawing scale is set on the display; and **characterised in that**:

the second setting step (S9) sets the image drawing scale of the 3D object on the 3D space to be a value which continuously changes from a maximum value to the minimum value corresponding to the distance;
the program further comprises program means adapted to carry out a fourth setting step (S10) that sets not to display the 3D object on the 3D space when the distance between the view point and the 3D object is in the fourth area.

**Patentansprüche**

1. Bildverarbeitungsvorrichtung (100), die eine 3D (dreidimensionale) Karte mit einer Straße und einem Gebäude auf einer Anzeige (117) darstellt, wobei die Bildverarbeitungsvorrichtung aufweist:

eine Entscheidungseinheit (111), die entscheidet, ob ein Abstand zwischen einem Betrachtungspunkt, der ein visuelles Feld auf einer Anzeige festlegt, und einem anzuzeigenden 2D-Gegenstand (2a, 2b, 2c) zu einem Bereich von einem ersten bis vierten Bereich (A1-A4) gehört, die in der Reihenfolge von einem geringsten Abstand bis zu einem größten Abstand klassifiziert sind;

eine erste Einstellungseirkheit (111), die eine Abbildungsgröße des 2D-Gegenstands auf der Anzeige auf einen Maximalwert festlegt, wenn sich der Abstand zwischen Betrachtungspunkt und 2D-Objekt im ersten Bereich befindet;

eine zweite Einstellungseinheit (111), die die Abbildungsgröße des 2D-Gegenstands auf der Anzeige festlegt, wenn sich der Abstand zwischen Betrachtungspunkt und 2D-Objekt im zweiten Bereich befindet;

eine dritte Einstellungseinheit (111), die die Abbildungsgröße des 2D-Gegenstands auf der Anzeige auf einen Minimalwert festlegt, wenn sich der Abstand zwischen Betrachtungspunkt und 2D-Objekt im dritten Bereich befindet;

eine Abbildungseinheit (111), die den 2D-Gegenstand zweidimensional anzeigt, dessen Abbildungsgröße auf der Anzeige festgelegt ist; und **dadurch gekennzeichnet ist, dass**:

die zweite Einstellungseinheit die Abbildungsgröße des 2D-Gegenstands auf der Anzeige auf einen Wert festlegt, der sich je nach Abstand kontinuierlich vom Maximalwert zum Minimalwert ändert; und wobei die Vorrichtung weiterhin eine vierte Einstellungseinheit (111) aufweist, die einstellt, den 2D-Gegenstand auf der Anzeige nicht anzuzeigen, wenn sich der Abstand zwischen Betrachtungspunkt und 2D-Objekt im vierten Bereich befindet;

2.  Bildverarbeitungsvorrichtung gemäß Anspruch 1, wobei die Bildverarbeitungsvorrichtung weiterhin **gekennzeichnet ist durch** eine Zeichnungseinheit für eine Teilstreckenangabe (114), die eine Teilstreckenangabe zeichnet mit einer Länge, die von der maximalen Länge korrigiert ist, die bei allen Arten von 2D-Gegenständen basierend auf den Absenkwinkel vom Betrachtungspunkt zum 2D-Gegenstand bestimmt ist und eine umgekehrte Dreiecksform aufweist, deren oberes Ende den 2D-Gegenstand berührt und dessen unteres Ende einen Punkt angibt, an dem der 2D-Gegenstand vorhanden ist.

3.  Bildverarbeitungsvorrichtung gemäß Anspruch 1 oder 2, wobei die Bildverarbeitungsvorrichtung **dadurch gekennzeichnet ist, dass** der 2D-Gegenstand, der durch die vierte Einstellungseinheit als nicht anzeigend festgelegt wurde, an einer Position angezeigt wird, die der Existenz des 2D-Gegenstands am Horizont mit der minimalen Abbildungsgröße auf der Anzeige entspricht, wenn der 2D-Gegenstand ein bestimmter, von einem Benutzer registrierter Punkt ist.

4.  Bildverarbeitungsvorrichtung (100), die eine 3D-Karte mit einer Straße und einem Gebäude auf einer Anzeige (117) darstellt, wobei die Bildverarbeitungsvorrichtung aufweist:

eine Entscheidungseinheit (111), die entscheidet, ob ein Abstand zwischen einem Betrachtungspunkt, der ein visuelles Feld auf einer Anzeige festlegt und einem anzuzeigenden 3D-Gegenstand (4a, 4b, 4c) zu einem Bereich von einem ersten bis vierten Bereich (A1-A4) gehört, die in der Reihenfolge von einem geringsten Abstand bis zu einem größten Abstand klassifiziert sind;

eine erste Einstellungseinheit (111), die einen Abbildungsmaßstab des 3D-Gegenstands in einem 3D-Raum auf einen Minimalwert festlegt, wenn sich der Abstand von Betrachtungspunkt und 3D-Objekt im ersten Bereich befindet;

eine zweite Einstellungseinheit (111), die den Abbildungsmaßstab des 3D-Gegenstands im 3D-Raum festlegt, wenn sich der Abstand zwischen Betrachtungspunkt und 3D-Objekt im zweiten Bereich befindet;

eine dritte Einstellungseinheit (111), die den Abbildungsmaßstab des 3D-Gegenstands im 3D-Raum auf einen Maximalwert festlegt, wenn sich der Abstand zwischen Betrachtungspunkt und 3D-Objekt im dritten Bereich befindet;

eine Abbildungseinheit (111), die den 3D-Gegenstand dreidimensional anzeigt, dessen Abbildungsmaßstab auf der Anzeige festgelegt ist; und **dadurch gekennzeichnet ist, dass**:

die zweite Einstellungseinheit den Abbildungsmaßstab des 3D-Gegenstands im 3D-Raum auf einen Wert festlegt, der sich je nach Abstand kontinuierlich vom Maximalwert zum Minimalwert ändert; und wobei die Vorrichtung weiterhin eine vierte Einstellungseinheit (111) aufweist, die einstellt, den 3D-Gegenstand im 3D-Raum nicht anzuzeigen, wenn sich der Abstand zwischen Betrachtungspunkt und 3D-Objekt im vierten Bereich befindet.

5.  Markierungsverfahren, das angepasst ist, um eine Bildverarbeitungsvorrichtung (100) zur Anzeige einer 3D-Karte mit einer Straße und einem Gebäude auf einer Anzeige zu veranlassen, wobei das Markierungsverfahren aufweist; einen Entscheidungsschritt (S3-S8), der entscheidet, ob ein Abstand zwischen einem Betrachtungspunkt, der ein visuelles Feld auf einer Anzeige festlegt, und einem anzuzeigenden 2D-Gegenstand (2a, 2b, 2c) zu einem Bereich von einem ersten bis vierten Bereichs (A1-A4) gehört, die in der Reihenfolge von einem geringsten Abstand bis zu einem größten Abstand klassifiziert sind;
einen ersten Einstellungsschritt (S7), der eine Abbildungsgröße des 2D-Gegenstands auf der Anzeige auf einen Maximalwert festlegt, wenn sich der Abstand zwischen Betrachtungspunkt und 2D-Objekt im ersten Bereich befindet;
einen zweiten Einstellungsschritt (S9), der die Abbildungsgröße des 2D-Gegenstands auf der Anzeige festlegt, wenn sich der Abstand zwischen Betrachtungspunkt und 2D-Objekt im zweiten Bereich befindet;
einen dritten Einstellungsschritt (S5), der eine Abbildungsgröße des 2D-Gegenstands auf der Anzeige auf den Minimalwert festlegt, wenn sich der Abstand zwischen Betrachtungspunkt und 2D-Objekt im dritten Bereich befindet;
einen Abbildungsschritt (S17), der den 2D-Gegenstand zweidimensional anzeigt, dessen Abbildungsgröße auf der Anzeige festgelegt ist; und **dadurch gekennzeichnet ist, dass**:

der zweite Einstellungsschritt die Abbildungsgröße des 2D-Gegenstands auf der Anzeige auf einen Wert festlegt, der sich je nach Abstand kontinuierlich vom Maximalwert zum Minimalwert ändert; und
wobei das Verfahren weiterhin einen vierten Einstellungsschritt (S 10) aufweist, der einstellt, den 2D-Gegenstand auf der Anzeige nicht anzuzeigen, wenn sich der Abstand zwischen Betrachtungspunkt und 2D-Objekt im vierten Bereich befindet.

6. Markierungsverfahren, das angepasst ist, um eine Bildverarbeitungsvorrichtung (100) zur Anzeige einer 3D-Karte mit einer Straße und einem Gebäude auf einer Anzeige zu veranlassen, wobei das Markierungsverfahren aufweist;
einen Entscheidungsschritt (S3-S8), der entscheidet, ob ein Abstand zwischen einem Betrachtungspunkt, der ein visuelles Feld auf einer Anzeige festlegt, und einem anzuzeigenden 3D-Gegenstand (4a, 2b, 2c) zu einem Bereich von einem ersten bis vierten Bereich (A1-A4) gehört, die in der Reihenfolge von einem geringsten Abstand bis zu einem größten Abstand klassifiziert sind;
einen ersten Einstellungsschritt (S7), der einen Abbildungsmaßstab des 3D-Gegenstands in einem 3D-Raum auf einen Minimalwert festlegt, wenn sich der Abstand zwischen Betrachtungspunkt und 3D-Objekt im ersten Bereich befindet;
einen zweiten Einstellungsschritt (S9), der den Abbildungsmaßstab des 3D-Gegenstands im 3D-Raum festlegt, wenn sich der Abstand zwischen Betrachtungspunkt und 3D-Objekt im zweiten Bereich befindet;
einen dritten Einstellungsschritt (S5), der einen Abbildungsmaßstab des 3D-Gegenstands im 3D-Raum auf einen Maximalwert festlegt, wenn sich der Abstand zwischen Betrachtungspunlct und 3D-Objekt im dritten Bereich befindet;
einen Abbildungsschritt (S17), der den 3D-Gegenstand dreidimensional anzeigt, dessen Abbildungsmaßstab auf der Anzeige festgelegt ist; und **dadurch gekennzeichnet ist, dass**:

der zweite Einstellungsschritt (S9) den Abbildungsmaßstab des 3D-Gegenstands im 3D-Raum auf einen Wert festlegt, der sich je nach Abstand kontinuierlich vom Maximalwert zum Minimalwert ändert; und
wobei das Verfahren weiterhin einen vierten Einstellungsschritt (S10) aufweist, der einstellt, den 3D-Gegenstand im 3D-Raum nicht anzuzeigen, wenn sich der Abstand zwischen Betrachtungspunkt und 3D-Objekt im vierten Bereich befindet.

7. Markierungsprogramm, das angepasst ist, um eine Bildverarbeitungsvorrichtung (100) zur Anzeige einer 3D-Karte mit einer Straße und einem Gebäude auf einer Anzeige zu veranlassen, wobei das Markierungsprogramm Programmmittel aufweist, die zur Ausführung angepasst sind
eines Entscheidungsschritts (S3-S8), der entscheidet, ob ein Abstand zwischen einem Betrachtungspunkt, der ein visuelles Feld auf einer Anzeige festlegt, und einem anzuzeigenden 2D-Gegenstand (2a, 2b, 2c) zu einem Bereich von einem ersten bis vierten Bereich (A1-A4) gehört, die in der Reihenfolge von einem geringsten Abstand bis zu einem größten Abstand klassifiziert sind;
eines ersten Einstellungsschritts (S7), der eine Abbildungsgröße des 2D-Gegenstands auf der Anzeige auf einen Maximalwert festlegt, wenn sich der Abstand zwischen Betrachtungspunkt und 2D-Objekt im ersten Bereich befindet;
eines zweiten Einstellungsschritts (S9), der die Abbildungsgröße des 2D-Gegenstands auf der Anzeige festlegt, wenn sich der Abstand zwischen Betrachtungspunkt und 2D-Objekt im zweiten Bereich befindet;
eines dritten Einstellungsschritts (S5), der eine Abbildungsgröße des 2D-Gegenstands auf der Anzeige auf einen Minimalwert festlegt, wenn sich der Abstand zwischen Betrachtungspunkt und 2D-Objekt im dritten Bereich befindet;
eines Abbildungsschritts (S17), der den 2D-Gegenstand zweidimensional anzeigt, dessen Abbildungsgröße auf der Anzeige festgelegt ist; und **dadurch gekennzeichnet ist, dass**:

der zweite Einstellungsschritt die Abbildungsgröße des 2D-Gegenstands auf der Anzeige auf einen Wert festlegt, der sich je nach Abstand kontinuierlich vom Maximalwert zum Minimalwert ändert; und
wobei das Programm weiterhin Programmmittel aufweist, die ausgebildet sind, um einen vierten Einstellungsschritt (S 10) durchzuführen, der einstellt, den 2D-Gegenstand auf der Anzeige nicht anzuzeigen, wenn sich der Abstand zwischen Betrachtungspunkt und 2D-Objekt im vierten Bereich befindet.

8. Markierungsprogramm, das angepasst ist, um eine Bildverarbeitungsvorrichtung (100) zur Anzeige einer 3D-Karte mit einer Straße und einem Gebäude auf einer Anzeige zu veranlassen, wobei das Markierungsprogramm Programmmittel aufweist, die zur Ausführung angepasst sind
eines Entscheidungsschritts (S3-S8), der entscheidet, ob ein Abstand zwischen einem Betrachtungspunkt, der ein visuelles Feld auf einer Anzeige festlegt, und einem anzuzeigenden 3D-Gegenstand (4a, 4b, 4c) zu einem Bereich von einem ersten bis vierten Bereich (A1-A4) gehört, die in der Reihenfolge von einem geringsten Abstand bis zu einem größten Abstand klassifiziert sind;
eines ersten Einstellungsschritts (S7), der einen Abbildungsmaßstab des 3D-Gegenstands in einem 3D-Raum auf einen Minimalwert festlegt, wenn sich der Abstand von Betrachtungspunkt und 3D-Objekt im ersten Bereich befindet;
eines zweiten Einstellungsschritts (S9), der den Abbildungsmaßstab des 3D-Gegenstands im 3D-Raum festlegt, wenn sich der Abstand zwischen Betrachtungspunkt und 3D-Objekt im zweiten Bereich befindet;
eines dritten Einstellungsschritts (S5), der einen Abbildungsmaßstab des 3D-Gegenstands im 3D-Raum auf einen Maximalwert festlegt, wenn sich der Abstand zwischen Betrachtungspunkt und 3D-Objekt im dritten Bereich befindet;
eines Abbildungsschritts (S17), der den 3D-Gegenstand dreidimensional anzeigt, dessen Abbildungsmaßstab auf der Anzeige festgelegt ist; und **dadurch gekennzeichnet ist, dass**:

der zweite Einstellungsschritt (S9) den Abbildungsmaßstab des 3D-Gegenstands im 3D-Raum auf einen Wert festlegt, der sich je nach Abstand kontinuierlich vom Maximalwert zum Minimalwert ändert; und
wobei das Programm weiterhin Programmmittel aufweist, die ausgebildet sind, um einen vierten Einstellungsschritt (S 10) durchzuführen, der einstellt, den 3D-Gegenstand im 3D-Raum nicht anzuzeigen, wenn sich der Abstand zwischen Betrachtungspunkt und 3D-Objekt im vierten Bereich befindet.

## Revendications

1. Dispositif de traitement d'image (100) qui affiche une carte 3D (tridimensionnelle) comprenant une route et un bâtiment sur un afficheur (117), le dispositif de traitement d'image comprenant :

une unité de détermination (111) qui détermine si une distance entre un point de vue qui détermine un champ visuel sur un afficheur et un objet 2D (2a, 2b, 2c) à afficher appartient à l'une quelconque de première à quatrième zones (A1 à A4) qui sont classées dans l'ordre d'une distance la plus courte à une distance la plus longue ;
une première unité de réglage (111) qui règle une taille de dessin d'image de l'objet 2D sur l'afficheur pour être une valeur maximum lorsque la distance entre le point de vue et l'objet 2D est dans la première zone ;
une deuxième unité de réglage (111) qui règle la taille de dessin d'image de l'objet 2D sur l'afficheur lorsque la distance entre le point de vue et l'objet 2D est dans la deuxième zone ;
une troisième unité de réglage(111) qui règle la taille de dessin d'image de l'objet 2D sur l'afficheur pour être une valeur minimum lorsque la distance entre le point de vue et l'objet 2D est dans la troisième zone ;
une unité de dessin d'image (111) qui affiche de manière bidimensionnelle l'objet 2D dont la taille de dessin d'image est établie sur l'afficheur ; et **caractérisé en ce que :**

la deuxième unité de réglage règle la taille de dessin d'image de l'objet 2D sur l'afficheur pour être une valeur qui varie continuellement de la valeur maximum à une valeur minimum correspondant à la distance ; et
le dispositif comprend en outre une quatrième unité de réglage (111) qui règle de ne pas afficher l'objet 2D sur l'afficheur lorsque la distance entre le point de vue et l'objet 2D est dans la quatrième zone.

2. Dispositif de traitement d'image selon la revendication 1, le dispositif de traitement d'image étant en outre **caractérisé par** :

une unité de dessin d'indicateur à pied (114) qui dessine un indicateur à pied qui a une longueur corrigée par rapport à une longueur maximum déterminée dans chacun des types d'objets 2D sur la base de l'angle de dépression du point de vue à l'objet 2D et qui a une forme triangulaire inversée dont l'extrémité supérieure est en contact avec l'objet 2D et dont l'extrémité inférieure indique un point où l'objet 2D existe.

3. Dispositif de traitement d'image selon la revendication 1 ou 2, le dispositif de traitement d'image étant **caractérisé en ce que** l'objet 2D qui est réglé comme ne devant pas être affiché par la quatrième unité de réglage est affiché à une position correspondant à l'existence de l'objet 2D sur l'horizon avec la taille de dessin d'image minimum sur l'afficheur lorsque l'objet 2D est un point spécifique qui est enregistré par un utilisateur.

4. Dispositif de traitement d'image (100) qui affiche une carte 3D comprenant une route et un bâtiment sur un afficheur (117), le dispositif de traitement d'image comprenant :

   une unité de détermination (111) qui détermine si une distance entre un point de vue qui détermine un champ visuel sur un afficheur et un objet 3D (4a, 4b, 4c) à afficher appartient à l'une quelconque de première à quatrième zones (A1' à A4') qui sont classées dans l'ordre d'une distance la plus courte à une distance la plus longue ;
   une première unité de réglage (111) qui règle une échelle de dessin d'image de l'objet 3D sur un espace 3D pour être une valeur minimum lorsque la distance entre le point de vue et l'objet 3D est dans la première zone ;
   une deuxième unité de réglage (111) qui règle l'échelle de dessin d'image de l'objet 3D sur l'espace 3D lorsque la distance entre le point de vue et l'objet 3D est dans la deuxième zone ;
   une troisième unité de réglage(111) qui règle l'échelle de dessin d'image de l'objet 3D sur l'espace 3D pour être la valeur maximum lorsque la distance entre le point de vue et l'objet 3D est dans la troisième zone ;
   une unité de dessin d'image (111) qui affiche de manière tridimensionnelle l'objet 3D dont l'échelle de dessin d'image est établie sur l'afficheur ; et **caractérisé en ce que** :

   la deuxième unité de réglage règle l'échelle de dessin d'image de l'objet 3D sur l'espace 3D pour être une valeur qui varie continuellement d'une valeur maximum à la valeur minimum correspondant à la distance ; et le dispositif comprend en outre une quatrième unité de réglage (111) qui règle de ne pas afficher l'objet 3D sur l'espace 3D lorsque la distance entre le point de vue et l'objet 3D est dans la quatrième zone.

5. Procédé de dessin de repère adapté pour amener un dispositif de traitement d'image (100) à afficher une carte 3D comprenant une route et un bâtiment sur un afficheur, le procédé de dessin de repère comprenant :

   une étape de détermination (S3 à S8) qui détermine si une distance entre un point de vue qui détermine un champ visuel sur un afficheur et un objet 2D (2a, 2b, 2c) à afficher appartient à l'une quelconque de première à quatrième zones (A1 à A4) qui sont classées dans l'ordre d'une distance la plus courte à une distance la plus longue ;
   une première étape de réglage (S7) qui règle une taille de dessin d'image de l'objet 2D sur l'afficheur pour être une valeur maximum lorsque la distance entre le point de vue et l'objet 2D est dans la première zone ;
   une deuxième étape de réglage (S9) qui règle la taille de dessin d'image de l'objet 2D sur l'afficheur lorsque la distance entre le point de vue et l'objet 2D est dans la deuxième zone ;
   une troisième étape de réglage (S5) qui règle la taille de dessin d'image de l'objet 2D sur l'afficheur pour être une valeur minimum lorsque la distance entre le point de vue et l'objet 2D est dans la troisième zone ;
   une étape de dessin d'image (S17) qui affiche de manière bidimensionnelle l'objet 2D dont la taille de dessin d'image est réglée sur l'afficheur ; et **caractérisé en ce que** :

   la deuxième étape de réglage règle la taille de dessin d'image de l'objet 2D sur l'afficheur pour être une valeur qui varie continuellement de la valeur maximum à une valeur minimum correspondant à la distance ; et
   le procédé comprend en outre une quatrième étape de réglage (S10) qui règle de ne pas afficher l'objet 2D sur l'afficheur lorsque la distance entre le point de vue et l'objet 2D est dans la quatrième zone.

6. Procédé de dessin de repère adapté pour amener un dispositif de traitement d'image (100) à afficher une carte 3D comprenant une route et un bâtiment sur un afficheur, le procédé de dessin de repère comprenant :

   une étape de détermination (S3 à S8) qui détermine si une distance entre un point de vue qui détermine un champ visuel sur un afficheur et un objet 3D (4a, 4b, 4c) à afficher appartient à l'une quelconque de première à quatrième zones (A1' à A4') qui sont classées dans l'ordre d'une distance la plus courte à une distance la plus longue ;
   une première étape de réglage (S7) qui règle une échelle de dessin d'image de l'objet 3D sur un espace 3D pour être une valeur minimum lorsque la distance entre le point de vue et l'objet 3D est dans la première zone ;

une deuxième étape de réglage (S9) qui règle l'échelle de dessin d'image de l'objet 3D sur l'espace 3D lorsque la distance entre le point de vue et l'objet 3D est dans la deuxième zone ;

une troisième étape de réglage (S5) qui règle l'échelle de dessin d'image de l'objet 3D sur l'espace 3D pour être la valeur maximum lorsque la distance entre le point de vue et l'objet 3D est dans la troisième zone ;

une étape de dessin d'image (S17) qui affiche de manière tridimensionnelle l'objet 3D dont l'échelle de dessin d'image est réglée sur l'afficheur ; et **caractérisé en ce que** :

la deuxième étape de réglage (S9) règle l'échelle de dessin d'image de l'objet 3D sur l'espace 3D pour être une valeur qui varie continuellement d'une valeur maximum à la valeur minimum correspondant à la distance ; et

le procédé comprend en outre une quatrième étape de réglage (S10) qui règle de ne pas afficher l'objet 3D sur l'espace 3D lorsque la distance entre le point de vue et l'objet 3D est dans la quatrième zone.

7. Programme de dessin de repère adapté pour amener un dispositif de traitement d'image (100) à afficher une carte 3D comprenant une route et un bâtiment sur un afficheur, le programme de dessin de repère comprenant des moyens formant programme adaptés pour effectuer :

une étape de détermination (S3 à S8) qui détermine si une distance entre un point de vue qui détermine un champ visuel sur un afficheur et un objet 2D (2a, 2b, 2c) à afficher appartient à l'une quelconque de première à quatrième zones (A1 à A4) qui sont classées dans l'ordre d'une distance la plus courte à une distance la plus longue ;

une première étape de réglage (S7) qui règle une taille de dessin d'image de l'objet 2D sur l'afficheur pour être une valeur maximum lorsque la distance entre le point de vue et l'objet 2D est dans la première zone ;

une deuxième étape de réglage (S9) qui règle la taille de dessin d'image de l'objet 2D sur l'afficheur lorsque la distance entre le point de vue et l'objet 2D est dans la deuxième zone ;

une troisième étape de réglage (S5) qui règle la taille de dessin d'image de l'objet 2D sur l'afficheur pour être une valeur minimum lorsque la distance entre le point de vue et l'objet 2D est dans la troisième zone ;

une étape de dessin d'image (S17) qui affiche de manière bidimensionnelle l'objet 2D dont la taille de dessin d'image est réglée sur l'afficheur ; et **caractérisé en ce que** :

la deuxième étape de réglage règle la taille de dessin d'image de l'objet 2D sur l'afficheur pour être une valeur qui varie continuellement de la valeur maximum à une valeur minimum correspondant à la distance ; et

le programme comprend en outre des moyens formant programme adaptés pour effectuer une quatrième étape de réglage (S10) qui règle de ne pas afficher l'objet 2D sur l'afficheur lorsque la distance entre le point de vue et l'objet 2D est dans la quatrième zone.

8. Programme de dessin de repère adapté pour amener un dispositif de traitement d'image (100) à afficher une carte 3D comprenant une route et un bâtiment sur un afficheur, le programme de dessin de repère comprenant des moyens formant programme adaptés pour effectuer :

une étape de détermination (S3 à S8) qui détermine si une distance entre un point de vue qui détermine un champ visuel sur un afficheur et un objet 3D (4a, 4b, 4c) à afficher appartient à l'une quelconque de première à quatrième zones (A1' à A4') qui sont classées dans l'ordre d'une distance la plus courte à une distance la plus longue ;

une première étape de réglage (S7) qui règle une échelle de dessin d'image de l'objet 3D sur un espace 3D pour être une valeur minimum lorsque la distance entre le point de vue et l'objet 3D est dans la première zone ;

une deuxième étape de réglage (S9) qui règle l'échelle de dessin d'image de l'objet 3D sur l'espace 3D lorsque la distance entre le point de vue et l'objet 3D est dans la deuxième zone ;

une troisième étape de réglage (S5) qui règle l'échelle de dessin d'image de l'objet 3D sur l'espace 3D pour être la valeur maximum lorsque la distance entre le point de vue et l'objet 3D est dans la troisième zone ;

une étape de dessin d'image (S17) qui affiche de manière tridimensionnelle l'objet 3D dont l'échelle de dessin d'image est établie sur l'afficheur ; et **caractérisé en ce que** :

la deuxième étape de réglage (S9) règle l'échelle de dessin d'image de l'objet 3D sur l'espace 3D pour être une valeur qui varie continuellement d'une valeur maximum à la valeur minimum correspondant à la distance ; et

le programme comprend en outre des moyens formant programme adaptés pour effectuer une quatrième étape de réglage (S10) qui règle de ne pas afficher l'objet 3D sur l'espace 3D lorsque la distance entre le point de vue et l'objet 3D est dans la quatrième zone.

FIG.1

CAR NAVIGATION
APPARATUS — 100

HD — 101

DISK READING
DEVICE — 102

DATA
BUFFER — 103

MAP READING
CONTROLLER — 104

GPS RECEIVER — 105

SELF-CONTAINED
NAVIGATION SENSOR — 106

CAR POSITION
CALCULATING
SECTION — 107

DISTANCE VIEW
DRAWING
SECTION — 108

MAP
DRAWING
SECTION — 109

MARK IMAGE
DRAWING
SECTION — 111

OPERATING
SCREEN
DRAWING
SECTION — 112

NAVIGATING
ROUTE
DRAWING
SECTION — 114

ROUTE
SEARCH
PROCESSING
SECTION — 113

VRAM — 115

IMAGE OUTPUTTING SECTION — 116

DISPLAY — 117

# FIG.2

EP 1 746 391 B1

# FIG.3

EP 1 746 391 B1

S1 — READ DISPLAYING DATA OF OBJECT

S2 — DETECT DISPLAYING COORDINATE OF OBJECT

**CALCULATION OF IMAGE DRAWING SIZE S BY DISTANCE X**

S3 — CALCULATE DISTANCE X BETWEEN DISPLAYING COORDINATE AND VIEW POINT POSITION

S4 — $L_2 \leq X < L_3$?
- YES → S5 — SET $S = S_{min}$
- NO → S6 — $X < L_1$?
  - YES → S7 — SET $S = S_{max}$
  - NO → S8 — $L_1 \leq X < L_2$?
    - YES → S9 — SET S TO BE VALUE BETWEEN $S_{max}$ AND $S_{min}$ CORRESPONDING TO X
    - NO → S10 — NOT PERFORM IMAGE DRAWING BY CONSIDERING $X \geq L_3$

S11 — DETERMINE IMAGE DRAWING SIZE S

**CALCULATION OF LENGTH h OF LEG INDICATOR BY DEPRESSION ANGLE θ**

S12 — DETECT MAXIMUM LENGTH $h_{max}$ OF LEG INDICATOR OF EACH OBJECT

S13 — CALCULATE LENGTH h OF LEG INDICATOR BY USING DEPRESSION ANGLE $\theta$

S14 — $h > h_{max}$?
- YES → S15 — SET $h = h_{max}$
- NO → S16 — DETERMINE LENGTH h OF LEG INDICATOR BY USING DEPRESSION ANGLE $\theta$

S17 — TWO-DIMENSIONALLY DISPLAY OBJECT AND LEG INDICATOR ON DISPLAYING SCREEN BASED ON DETERMINED IMAGE DRAWING SIZE S AND LENGTH h OF LEG INDICATOR

FIG.4

20

# FIG.5

EP 1 746 391 B1

# FIG.6

EP 1 746 391 B1

**FIG.7**

- S21: READ DISPLAYING DATA OF OBJECT
- S22: DETECT DISPLAYING COORDINATE OF OBJECT
- S23: CALCULATE DISTANCE X BETWEEN DISPLAYING COORDINATE AND VIEW POINT POSITION
- S24: $L2' \leq X < L3'$ ?
  - YES → S25: SET SC = $SC_{max}$
  - NO →
- S26: $X < L1'$ ?
  - YES → S27: SET SC = $S_{min}$
  - NO →
- S28: $L1' \leq X < L2'$ ?
  - YES → S29: SET SC TO BE VALUE BETWEEN $SC_{max}$ AND $SC_{min}$ CORRESPONDING TO X
  - NO → S30: NOT PERFORM IMAGE DRAWING BY CONSIDERING $X \geq L3'$
- S31: DETERMINE IMAGE DRAWING SCALE SC
- S32: THREE-DIMENSIONALLY DISPLAY OBJECT ON MAP BASED ON DETERMINED IMAGE DRAWING SCALE SC

# FIG.8

EP 1 746 391 B1

# FIG.9

# FIG.10

25a

25b

EP 1 746 391 B1

# FIG.11

(a)

(b)

# FIG.12

(a)

XX SEASIDE PARK
ARIAKE EXIT
27c
27b
○○ 1 CHOME
(PLACE NAME)
ooo 27a
27d
ooo
27e
357
MINATO
WARD
△△ MARKET

(b)

27c ooo
27b ooo
27a
ooo
ooo
27d
ooo
27e

(c)

ooo
357

# FIG.13

# FIG.14

**REFERENCES CITED IN THE DESCRIPTION**

**Patent documents cited in the description**

- JP 9319302 A

- EP 1260792 A2